# EUROPÄISCHE PATENTANMELDUNG

(11) **EP 4 350 795 A1**
(43) Veröffentlichungstag der Anmeldung: **10.04.2024**
(21) Anmeldenummer: 22199811.5
(22) Anmeldetag: 05.10.2022
(51) Int. Cl.: H01M 4/04, B29B 7/48

(54) **AUFBEREITUNGSANLAGE UND VERFAHREN ZUM AUFBEREITEN EINES ENERGIESPEICHERMATERIALS**

(71) Anmelder: Coperion GmbH, 70469 Stuttgart (DE)
(72) Erfinder: Fiedler, Markus, 75446 Wiernsheim (DE); Dr. Heyn, Johannes, 73730 Esslingen am Neckar (DE)
(74) Vertreter: Rau, Schneck & Hübner Patentanwälte Rechtsanwälte PartGmbB

(57) **Zusammenfassung**

Bei einer Aufbereitungsanlage (1) zum Aufbereiten eines Energiespeichermaterials (M) ist eine Druckaufbauvorrichtung (4) nach einer Mischvorrichtung (2) angeordnet. Die Mischvorrichtung (2) dient zum Aufbereiten des Energiespeichermaterials (M). Mittels der Druckaufbauvorrichtung (4) wird ein Druck des Energiespeichermaterials (M) für eine anschließende Formgebung erhöht. Dadurch, dass die Mischvorrichtung (2) und die Druckaufbauvorrichtung (4) separat voneinander ausgebildet sind, wird eine gute Mischwirkung und eine gute Druckaufbauwirkung erzielt. Das Energiespeichermaterial (M) kann somit auf einfache und zuverlässige Weise mit einer hohen Qualität aufbereitet werden. Das Energiespeichermaterial (M) dient insbesondere zur Herstellung von Bipolarplatten für Brennstoffzellen und/oder zur Herstellung von galvanischen Energiespeichern.

## Beschreibung

Die Erfindung betrifft eine Aufbereitungsanlage und ein Verfahren zum Aufbereiten eines Energiespeichermaterials.

Energiespeichermaterialien werden für die Herstellung von Bipolarplatten für Brennstoffzellen und für die Herstellung von galvanischen Energiespeichern, wie beispielsweise Akkumulatoren oder Batterien, benötigt.

Aus der DE 10 2009 051434 A1 ist ein Verfahren zur Herstellung einer flachen Bahn aus einem Energiespeichermaterial bekannt. Die flache Bahn dient beispielsweise zur Herstellung von Bipolarplatten für Brennstoffzellen. Einem Extruder werden Ausgangsmaterialien zugeführt, die zu dem Energiespeichermaterial vermischt werden. Am Auslass des Extruders ist eine Schlitzdüse angeordnet, durch die das in dem Extruder bereitgestellte Energiespeichermaterial unter hohem Druck extrudiert wird. Nach der Schlitzdüse liegt das Energiespeichermaterial als flache Bahn vor.

Der Erfindung liegt die Aufgabe zugrunde, eine Aufbereitungsanlage zu schaffen, die ein einfaches und zuverlässiges Aufbereiten eines Energiespeichermaterials mit einer hohen Qualität ermöglicht.

Diese Aufgabe wird durch eine Aufbereitungsanlage mit den Merkmalen des Anspruchs 1 gelöst. Erfindungsgemäß wurde erkannt, dass für eine hohe Qualität des Energiespeichermaterials einerseits eine gute Mischwirkung zum Vermischen von Ausgangsmaterialien und andererseits eine gute Druckaufbauwirkung für eine anschließende Formgebung erforderlich ist.

Eine Mischvorrichtung kann entweder hinsichtlich ihrer Mischwirkung oder hinsichtlich ihrer Druckaufbauwirkung optimiert werden, so dass die Qualität des Energiespeichermaterials in jedem der beschriebenen Fälle nicht zufriedenstellend ist.

Die erfindungsgemäße Aufbereitungsanlage weist deshalb eine separate Druckaufbauvorrichtung auf, die nach der Mischvorrichtung angeordnet ist. Vorzugsweise weist die Mischvorrichtung eine Förderrichtung auf. Die Druckaufbauvorrichtung ist insbesondere in der Förderrichtung nach der Mischvorrichtung angeordnet. Dadurch, dass die Mischvorrichtung und die Druckaufbauvorrichtung separat voneinander ausgebildet sind, können die Mischwirkung und die Druckaufbauwirkung unabhängig voneinander optimiert werden, so dass auf einfache und zuverlässige Weise ein Energiespeichermaterial mit hoher Qualität herstellbar ist. Die Mischvorrichtung ist hinsichtlich ihrer Mischwirkung optimiert und ermöglicht ein verbessertes Mischen der zugeführten Ausgangsmaterialien zu dem Energiespeichermaterial. Die erzeugte Mischung bzw. das Energiespeichermaterial wird anschließend der Druckaufbauvorrichtung zugeführt. Die Druckaufbauvorrichtung ist hinsichtlich ihrer Druckaufbauwirkung optimiert und erzeugt in dem Energiespeichermaterial einen hohen Druck zur anschließenden Formgebung. Die Druckaufbauvorrichtung dient insbesondere zum kontinuierlichen Durchführen eines Druckaufbaus in dem Energiespeichermaterial. Die Druckaufbauvorrichtung umfasst insbesondere eine Druckaufbauschneckenmaschine und/oder eine Zahnradpumpe. Vorzugsweise ermöglicht die Druckaufbauvorrichtung die Erzielung einer Druckerhöhung Δp, wobei insbesondere gilt: 1 bar ≤ Δp ≤ 2000 bar, insbesondere 5 bar ≤ Δp ≤ 1000 bar, und insbesondere 10 bar ≤ Δp ≤ 500 bar.

Die Formgebung erfolgt mittels eines Extrusionswerkzeugs, beispielsweise einer Schlitzdüse. Das Extrusionswerkzeug ist nach der Druckaufbauvorrichtung angeordnet. Vorzugsweise umfasst die Aufbereitungsanlage ein Extrusionswerkzeug, das nach der Druckaufbauvorrichtung angeordnet ist.

Die Aufbereitungsanlage, insbesondere die Mischvorrichtung, dient insbesondere zum kontinuierlichen Aufbereiten eines Energiespeichermaterials. Vorzugsweise definiert die Mischvorrichtung eine erste Förderrichtung und/oder die Druckaufbauvorrichtung eine zweite Förderrichtung für das Energiespeichermaterial. Die zweite Förderrichtung verläuft insbesondere parallel und/oder quer, insbesondere senkrecht, zu der ersten Förderrichtung. Die zweite Förderrichtung verläuft somit in einem Winkel zwischen 0° und 90° zu der ersten Förderrichtung. Die Druckaufbauvorrichtung ist insbesondere in der ersten Förderrichtung nach der Mischvorrichtung angeordnet. Ein Extrusionswerkzeug ist insbesondere in der zweiten Förderrichtung nach der Druckaufbauvorrichtung angeordnet.

Eine Aufbereitungsanlage nach Anspruch 2 gewährleistet ein einfaches und zuverlässiges Aufbereiten eines Energiespeichermaterials mit einer hohen Qualität. Die Aufbereitungsschneckenmaschine ermöglicht eine gute Mischwirkung. Die Ausgangsmaterialien werden mittels der Aufbereitungsschneckenmaschine in einfacher Weise vermischt und homogenisiert. Ein Druckaufbau ist nur soweit erforderlich, um das Energiespeichermaterial zu der Druckaufbauvorrichtung zu fördern.

Vorzugsweise umfasst die Aufbereitungsschneckenmaschine ein Gehäuse, in dem mindestens eine Gehäusebohrung ausgebildet ist. In der mindestens einen Gehäusebohrung ist eine jeweilige Behandlungselementwelle drehbar angeordnet. Die jeweilige Behandlungselementwelle hat ein Profil, das insbesondere eingängig bis zehngängig, insbesondere eingängig bis viergängig ist, vorzugsweise zweigängig bis dreigängig. Vorzugsweise ist die Aufbereitungsschneckenmaschine als mehrwellige Aufbereitungsschneckenmaschine bzw. als Mehrwellen-Aufbereitungsschneckenmaschine ausgebildet. Die mehrwellige Aufbereitungsschneckenmaschine umfasst insbesondere ein Gehäuse, in dem mindestens zwei Gehäusebohrungen ausgebildet sind. Die mindestens zwei Gehäusebohrungen durchdringen einander, insbesondere zumindest paarweise. In den mindestens zwei Gehäusebohrungen ist jeweils eine Behandlungselementwelle angeordnet. Die mehrwellige Aufbereitungsschneckenmaschine umfasst somit mindestens zwei Behandlungselementwellen. Die mindestens zwei Behandlungselementwellen sind vorzugsweise einander kämmend ausgebildet und/oder angeordnet. Die mindestens zwei Behandlungselementwellen sind parallel zueinander und/oder konisch zueinander ausgerichtet. Insbesondere verlaufen zu den mindestens zwei Behandlungselementwellen zugehörige Drehachsen parallel zueinander und/oder konisch zueinander bzw. in einem Winkel geneigt zueinander. Die mindestens zwei Behandlungselementwellen haben einen Außendurchmesser D_{A}, der entlang einer Länge L_{A} der mindestens zwei Behandlungselementwellen konstant und/oder sich verändernd sein kann. Der Außendurchmesser D_{A} kann sich insbesondere entlang der Länge L_{A} reduzieren, sodass die mindestens zwei Behandlungselementwellen konisch ausgebildet sind. Vorzugsweise umfasst die Mischvorrichtung eine zweiwellige Aufbereitungsschneckenmaschine bzw. eine Zweiwellen- Aufbereitungsschneckenmaschine.

Die mehrwellige Aufbereitungsschneckenmaschine bzw. Mehrwellen-Aufbereitungsschneckenmaschine ist vorzugsweise als gleichläufige Aufbereitungsschneckenmaschine oder als gegenläufige Aufbereitungsschneckenmaschine ausgebildet. Eine gleichläufige Aufbereitungsschneckenmaschine weist mindestens zwei gleichsinnig rotierende Behandlungselementwellen auf. Demgegenüber weist eine gegenläufige Aufbereitungsschneckenmaschine mindestens zwei entgegengesetzt rotierende Behandlungselementwellen auf.

Die Aufbereitungsschneckenmaschine ist vorzugsweise als gleichläufige Mehrwellen-Aufbereitungsschneckenmaschine, insbesondere als Zweiwellen-Aufbereitungsschneckenmaschine, ausgebildet. Vorzugsweise umfasst die Mischvorrichtung genau eine Mehrwellen-Aufbereitungsschneckenmaschine, insbesondere genau eine Zweiwellen-Aufbereitungsschneckenmaschine. Die Aufbereitungsschneckenmaschine weist somit eine optimale Mischwirkung auf. Eine gleichläufige Mehrwellen-Aufbereitungsschneckenmaschine ist axial offen und lässt grundsätzlich eine Rückströmung des Energiespeichermaterials zu. Dadurch, dass die gleichläufige Mehrwellen-Aufbereitungsschneckenmaschine primär nicht zum Druckaufbau genutzt wird, staut sich das Energiespeichermaterial in der gleichläufigen Mehrwellen-Aufbereitungsschneckenmaschine nicht bzw. nur geringfügig zurück. Ein übermäßiger Rückstau vor dem Austrag in Folge eines Druckaufbaus wäre nachteilig, da in das Energiespeichermaterial mehr mechanische Energie eingebracht werden würde, wodurch die Temperatur des Energiespeichermaterials in unerwünschter Weise ansteigen und das Energiespeichermaterial degradieren würde.

Die Mischvorrichtung kann eine Aufbereitungsschneckenmaschine oder mehrere Aufbereitungsschneckenmaschinen umfassen. Mehrere Aufbereitungsschneckenmaschinen können identisch und/oder unterschiedlich ausgebildet sein. Mehrere Aufbereitungsschneckenmaschinen können nacheinander bzw. in Reihe zueinander und/oder parallel zueinander angeordnet sein. Vorzugsweise sind mehrere Aufbereitungsschneckenmaschinen parallel zueinander angeordnet. Hierdurch können variable Durchsätze und/oder unterschiedliche Durchsätze mit unterschiedlichen Extrusionswerkzeugen erzielt werden. Stillstandzeiten während Rezepturwechseln, Wartungen und/oder Reinigungen können minimiert werden.

Eine Aufbereitungsanlage nach Anspruch 3 gewährleistet ein einfaches und zuverlässiges Aufbereiten eines Energiespeichermaterials mit einer hohen Qualität. Das Verhältnis L_{A}/D_{A} der Aufbereitungsschneckenmaschine ermöglicht eine gute Mischwirkung und Homogenisierungswirkung.

Eine Aufbereitungsanlage nach Anspruch 4 gewährleistet ein einfaches und zuverlässiges Aufbereiten eines Energiespeichermaterials mit einer hohen Qualität. Die Druckaufbauschneckenmaschine dient insbesondere zum kontinuierlichen Durchführen eines Druckaufbaus in dem Energiespeichermaterial. Die Druckaufbauschneckenmaschine hat eine verbesserte Druckaufbauwirkung. Der Druckaufbauschneckenmaschine wird das aus der Mischvorrichtung ausgetragene fließfähige Energiespeichermaterial zugeführt. Vorzugsweise weist die Druckaufbauschneckenmaschine ausschließlich eine Einzugszone und eine Druckaufbauzone auf.

Die Druckaufbauschneckenmaschine weist insbesondere mindestens eine Druckaufbau-Behandlungselementwelle auf. Die Druckaufbauwirkung der Druckaufbauschneckenmaschine kann insbesondere optimiert werden durch eine Steigung bzw. einen Förderwinkel der mindestens einen Druckaufbau-Behandlungselementwelle, eine Ganganzahl und/oder eine Gangtiefe der mindestens einen Druckaufbau-Behandlungselementwelle und/oder eine Kammbreite und/oder ein Kammspiel der mindestens einen Druckaufbau-Behandlungselementwelle. Die Druckaufbauwirkung wird beispielsweise erhöht, je kleiner die Steigung bzw. der Förderwinkel, je kleiner die Gangtiefe, je geringer die Ganganzahl und/oder je kleiner das Kammspiel ist. Vorzugsweise ist ein Spiel der aktiven Flanke und/oder der passiven Flanke möglichst klein.

Die Druckaufbauschneckenmaschine ist einwellig bzw. als Einwellen-Druckaufbauschneckenmaschine oder mehrwellig bzw. als Mehrwellen-Druckaufbauschneckenmaschine ausgebildet. Eine mehrwellige Druckaufbauschneckenmaschine ist insbesondere zweiwellig ausgebildet. Die mehrwellige Druckaufbauschneckenmaschine ist gegenläufig oder gleichläufig ausgebildet.

Vorzugsweise ist die Druckaufbauschneckenmaschine als Einwellen-Druckaufbauschneckenmaschine oder als gegenläufige Mehrwellen-Druckaufbauschneckenmaschine, insbesondere als gegenläufige Zweiwellen-Druckaufbauschneckenmaschine, ausgebildet.

Die Druckaufbauvorrichtung kann eine Druckaufbauschneckenmaschine oder mehrere Druckaufbauschneckenmaschinen umfassen. Mehrere Druckaufbauschneckenmaschinen können identisch und/oder unterschiedlich ausgebildet sein. Mehrere Druckaufbauschneckenmaschinen können nacheinander bzw. in Reihe zueinander und/oder parallel zueinander angeordnet sein. Vorzugsweise sind mehrere Druckaufbauschneckenmaschinen parallel zueinander angeordnet. Hierdurch können variable Durchsätze und/oder unterschiedliche Durchsätze mit unterschiedlichen Extrusionswerkzeugen erzielt werden. Stillstandzeiten während Rezepturwechseln, Wartungen und/oder Reinigungen können minimiert werden.

Eine Aufbereitungsanlage nach Anspruch 5 gewährleistet ein einfaches und zuverlässiges Aufbereiten eines Energiespeichermaterials mit einer hohen Qualität. Durch das Verhältnis L_{D}/D_{D} wird in einfacher Weise ein hoher Druckaufbau ermöglicht. Vorzugsweise umfasst die Druckaufbauschneckenmaschine ausschließlich eine Einzugszone zum Zuführen des fließfähigen Energiespeichermaterials und eine Druckaufbauzone zur Erhöhung des Drucks in dem fließfähigen Energiespeichermaterial. Da die Druckaufbauschneckenmaschine lediglich eine Druckaufbauwirkung bereitstellen muss, ist ein kompakter Aufbau der Druckaufbauschneckenmaschine möglich. Das Verhältnis L_{D}/D_{D} der Druckaufbauschneckenmaschine ist insbesondere kleiner als ein Verhältnis L_{A}/D_{A} einer Aufbereitungsschneckenmaschine, wobei L_{A} eine Länge und D_{A} einen Außendurchmesser der mindestens einen Behandlungselementwelle der Aufbereitungsschneckenmaschine bezeichnet.

Eine Aufbereitungsanlage nach Anspruch 6 gewährleistet ein einfaches und zuverlässiges Aufbereiten eines Energiespeichermaterials mit einer hohen Qualität. Die Druckaufbauschneckenmaschine ist einwellig ausgebildet, also als Einwellen-Druckaufbauschneckenmaschine ausgebildet. Die Einwellen-Druckaufbauschneckenmaschine umfasst ein Gehäuse, in dem eine Gehäusebohrung ausgebildet ist. In der Gehäusebohrung ist eine Druckaufbau-Behandlungselementwelle, insbesondere eine Druckaufbau-Schneckenelementwelle, drehbar angeordnet. Die Druckaufbau-Behandlungselementwelle weist vorzugsweise ein Profil auf, das eingängig bis zehngängig, insbesondere zweigängig bis viergängig, ausgebildet ist. Die Einwellen-Druckaufbauschneckenmaschine ermöglicht einen hohen Druckaufbau, da die Rückströmung bzw. Leckageströmung des Energiespeichermaterials zwischen der Innenwand des Gehäuses und der Kämme der Druckaufbau-Behandlungselementwelle gering ist.

Eine Aufbereitungsanlage nach Anspruch 7 gewährleistet ein einfaches und zuverlässiges Aufbereiten eines Energiespeichermaterials mit einer hohen Qualität. Die Druckaufbauschneckenmaschine ist mehrwellig ausgebildet, also als Mehrwellen-Druckaufbauschneckenmaschine ausgebildet. Die Mehrwellen-Druckaufbauschneckenmaschine ist gegenläufig oder gleichläufig ausgebildet. Die Mehrwellen-Druckaufbauschneckenmaschine umfasst ein Gehäuse, in dem mindestens zwei Gehäusebohrungen ausgebildet sind. In dem mindestens zwei Gehäusebohrungen ist jeweils eine Druckaufbau-Behandlungselementwelle, insbesondere eine Druckaufbau-Schneckenelementwelle, angeordnet. Die mindestens zwei Druckaufbau-Behandlungselementwellen, insbesondere die mindestens zwei Druckaufbau-Schneckenelementwellen, haben ein Profil, das insbesondere eingängig bis zehngängig, insbesondere eingängig bis viergängig, und insbesondere zweigängig bis dreigängig ausgebildet ist. Bei einer gegenläufigen Mehrwellen-Druckaufbauschneckenmaschine sind die mindestens zwei Behandlungselementwellen in entgegengesetzten Drehrichtungen rotierend in den mindestens zwei Gehäusebohrungen angeordnet. Bei einer gleichläufigen Mehrwellen-Druckaufbauschneckenmaschine sind die mindestens zwei Druckaufbau-Behandlungselementwellen in gleichen Drehrichtungen rotierend in den mindestens zwei Gehäusebohrungen angeordnet. Die mindestens zwei Gehäusebohrungen schneiden einander, insbesondere zumindest paarweise. Vorzugsweise ist die Mehrwellen-Druckaufbauschneckenmaschine als Zweiwellen-Druckaufbauschneckenmaschine ausgebildet.

Die gegenläufige Mehrwellen-Druckaufbauschneckenmaschine hat eine in sich abgeschlossene Kammerförderung, so dass die Rückströmung bzw. die Leckageströmung des Energiespeichermaterials gering ist, wodurch in einfacher Weise ein hoher Druckaufbau möglich ist. Der mechanische Energieeintrag in das Energiespeichermaterial ist bei dem Druckaufbau gering.

Die gleichläufige Mehrwellen-Druckaufbauschneckenmaschine muss lediglich für den Druckaufbau konfiguriert sein, so dass auch mittels einer gleichläufigen Mehrwellen-Druckaufbauschneckenmaschine ein guter Druckaufbau möglich ist, der auch ohne einen unerwünscht hohen mechanischen Energieeintrag in das Energiespeichermaterial realisierbar ist. Die gleichläufige Mehrwellen-Druckaufbauschneckenmaschine weist insbesondere mindestens zwei Druckaufbau-Behandlungselementwellen mit einem Profil auf, das eingängig bis zehngängig ist. Ein eingängiges Profil eignet sich in besonderer Weise zum Druckaufbau.

Umfasst die Druckaufbauvorrichtung eine Mehrwellen-Druckaufbauschneckenmaschine, so ist eine Aufbereitungsschneckenmaschine vorzugsweise an der Seite der abdrehenden Druckaufbau-Behandlungselementwelle angeordnet. Die mindestens zwei Druckaufbau-Behandlungselementwellen können vertikal oder horizontal zueinander angeordnet sein. Bei einer Druckaufbauschneckenmaschine mit mindestens zwei vertikal angeordneten Druckaufbau-Behandlungselementwellen kann die Aufbereitungsschneckenmaschine in einem Zwickelbereich der Druckaufbauschneckenmaschine angeordnet sein.

Eine Aufbereitungsanlage nach Anspruch 8 gewährleistet ein einfaches und zuverlässiges Aufbereiten eines Energiespeichermaterials mit einer hohen Qualität. Die Druckaufbauschneckenmaschine weist ein Gehäuse auf, in dem mindestens eine Gehäusebohrung ausgebildet ist. In der mindestens einen Gehäusebohrung ist jeweils eine Druckaufbau-Behandlungselementwelle, insbesondere eine Druckaufbau-Schneckenelementwelle, drehbar angeordnet. In der Einzugszone ist in dem Gehäuse eine Zuführöffnung ausgebildet. Die Zuführöffnung dient zum Zuführen des fließfähigen Energiespeichermaterials in die mindestens eine Gehäusebohrung. Das fließfähige Energiespeichermaterial wird in einer Förderrichtung zu der Druckaufbauzone gefördert. In der Druckaufbauzone erfolgt eine Erhöhung des Drucks in dem fließfähigen Energiespeichermaterial. In der Druckaufbauzone ist in dem Gehäuse eine Austragsöffnung ausgebildet. Durch die Austragsöffnung wird das fließfähige Energiespeichermaterial unter hohem Druck ausgetragen. Vorzugsweise weist die Druckaufbauschneckenmaschine ausschließlich eine Einzugszone und eine Druckaufbauzone auf. Die Druckaufbauzone ist in einer Förderrichtung der Druckaufbauschneckenmaschine nach der Einzugszone angeordnet.

Eine Aufbereitungsanlage nach Anspruch 9 gewährleistet ein einfaches und zuverlässiges Aufbereiten eines Energiespeichermaterials mit einer hohen Qualität.

Für eine mehrwellige Aufbereitungsschneckenmaschine und eine einwellige Druckaufbauschneckenmaschine gilt insbesondere:
1/5 ≤ D_{A}/D_{D} ≤ 2, und insbesondere 1/3 ≤ D_{A}/D_{D} ≤ 1.

Für eine mehrwellige, insbesondere zweiwellige, Aufbereitungsschneckenmaschine und eine mehrwellige, insbesondere zweiwellige, Druckaufbauschneckenmaschine gilt insbesondere:
1/5 ≤ D_{A}/D_{D} ≤ 3, und insbesondere 1/2 ≤ D_{A}/D_{D} ≤ 2.

Eine Aufbereitungsanlage nach Anspruch 10 gewährleistet ein einfaches und zuverlässiges Aufbereiten eines Energiespeichermaterials mit einer hohen Qualität. Dadurch, dass die mindestens eine Austragsöffnung der Mischvorrichtung bezogen auf die Richtung der Schwerkraft oberhalb der Zuführöffnung der Druckaufbauvorrichtung angeordnet ist, kann das fließfähige Energiespeichermaterial in einfacher Weise der Druckaufbauvorrichtung zugeführt werden. Das Zuführen des Energiespeichermaterials erfolgt mittels der Schwerkraft, und insbesondere drucklos. Vorzugsweise umfasst die Mischvorrichtung mehrere Austragsöffnungen zur Erzeugung von Strängen des Energiespeichermaterials. Hierzu umfasst die Mischvorrichtung vorzugweise eine Austragsplatte bzw. Lochplatte mit mehreren Austragsöffnungen zur Erzeugung von Strängen des Energiespeichermaterials. Alternativ ist eine offene Übergabe des Energiespeichermaterials ohne eine Lochplatte möglich.

Vorzugsweise umfasst die Aufbereitungsanlage mindestens ein Messer zum Zerkleinern der erzeugten Stränge. Das mindestens eine Messer kann mittels eines Antriebs drehantreibbar und/oder feststehend sein. Das mindestens eine Messer und der zugehörige Antrieb bilden eine Zerkleinerungseinheit zum Zerkleinern der erzeugten Stränge aus. Hierdurch wird das Zuführen des Energiespeichermaterials zu der Druckaufbauvorrichtung vereinfacht, da die Länge der erzeugten Stränge des Energiespeichermaterials in gewünschter Weise einstellbar ist, so dass Zuführprobleme bzw. Einzugsprobleme bei der Druckaufbauvorrichtung vermieden werden. Das Zerkleinern der Stränge erfolgt beispielsweise durch Heißabschlag. Das mindestens eine Messer kann zentrisch oder exzentrisch zu der Austragsplatte bzw. Lochplatte rotieren und/oder oszillieren. Die Zerkleinerungseinheit ist insbesondere in eine Verbindungsvorrichtung zum Verbinden der Mischvorrichtung und der Druckaufbauvorrichtung integriert.

Eine Aufbereitungsanlage nach Anspruch 11 gewährleistet ein einfaches und zuverlässiges Aufbereiten eines Energiespeichermaterials mit einer hohen Qualität. Die Verbindungsvorrichtung ist insbesondere an der Mischvorrichtung und/oder an der Druckaufbauvorrichtung befestigt. Die Verbindungsvorrichtung mündet insbesondere in Bezug auf eine Richtung der Schwerkraft von oben und/oder seitlich in die Druckaufbauvorrichtung, insbesondere in ein Gehäuse einer Druckaufbauschneckenmaschine.

Die Verbindungsvorrichtung umfasst insbesondere eine Temperiereinheit zum Temperieren bzw. Heizen und/oder Kühlen des fließfähigen Energiespeichermaterials und/oder eine Entgasungseinheit zum Entgasen des fließfähigen Energiespeichermaterials. Vorzugsweise ist in und/oder an der Verbindungsvorrichtung mindestens ein Sensor zur Messung mindestens einer Eigenschaft des Energiespeichermaterials angeordnet. Vorzugsweise umfasst die Verbindungsvorrichtung mindestens ein Verbindungselement. Das mindestens eine Verbindungselement wird beispielsweise durch eine Rohrleitung und/oder einen geschlossenen Schacht ausgebildet. Das mindestens eine Verbindungselement kann vakuumdicht ausgebildet sein und an eine Entgasungseinheit angeschlossen sein. Durch eine derartige Kapselung gegenüber der Umgebung werden Verunreinigungen und/oder eine Feuchteaufnahme aus der Umgebung verhindert. Flüchtige Verbindungen und/oder Wasser bzw. Wasserdampf können abgesaugt werden.

Das mindestens eine Verbindungselement bzw. das jeweilige Verbindungselement weist einen Innendurchmesser Dv auf, wobei vorzugsweise gilt: 0,5 ≤ D_{V}/D_{A} ≤ 10, insbesondere 0,8 ≤ D_{V}/D_{A} ≤ 5, und insbesondere 1 ≤ D_{V}/D_{A} ≤ 2, wobei D_{A} einen Außendurchmesser mindestens einer Behandlungselementwelle einer Aufbereitungsschneckenmaschine bezeichnet.
Vorzugsweise weist das mindestens eine Verbindungselement bzw. das jeweilige Verbindungselement eine Länge Lv auf, wobei gilt: 1 ≤ L_{V}/D_{A} ≤ 100, insbesondere 2 ≤ L_{V}/D_{A} ≤ 50, und insbesondere 4 ≤ L_{V}/D_{A} ≤ 10, wobei D_{A} einen Außendurchmesser mindestens einer Behandlungselementwelle einer Aufbereitungsschneckenmaschine bezeichnet.

Vorzugsweise ist das mindestens eine Verbindungselement teleskopierbar. Das mindestens eine Verbindungselement bzw. das jeweilige Verbindungselement umfasst insbesondere mindestens zwei Bauteile, die relativ zueinander verlagerbar sind, um eine Wärmeausdehnung auszugleichen. Vorzugweise umfasst die Verbindungsvorrichtung eine Isolierung, die das mindestens eine Verbindungselement umgibt.

Das mindestens eine Verbindungselement ist insbesondere geradlinig und/oder gekrümmt ausgebildet. Bei einer gekrümmten Ausbildung gilt für einen Krümmungsradius Rv insbesondere: 0,5 ≤ Rv /D_{A} ≤ 10, insbesondere 1 ≤ R_{V} /D_{A} ≤ 7, und insbesondere 2 ≤ R_{V} /D_{A} ≤ 4. Bei einer gekrümmten Ausbildung beträgt ein Krümmungswinkel α zwischen verbundenen geradlinigen Abschnitten des mindestens einen Verbindungselements insbesondere: 1° ≤ α ≤ 90°, insbesondere 5° ≤ α ≤ 70°, und insbesondere 10° ≤ α ≤ 50°.

Die Verbindungsvorrichtung dient insbesondere zum Aufteilen des fließfähigen Energiespeichermaterials in mehrere Stränge. Vorzugsweise ist die Verbindungsvorrichtung derart ausgebildet, dass das aus der Mischvorrichtung ausgetragene Energiespeichermaterial in N Teilströme aufgeteilt wird, wobei insbesondere gilt: 1 ≤ N ≤ 8, insbesondere
2 ≤ N ≤ 6, und insbesondere 3 ≤ N ≤ 4.

Eine Aufbereitungsanlage nach Anspruch 12 gewährleistet ein einfaches und zuverlässiges Aufbereiten eines Energiespeichermaterials mit einer hohen Qualität. Die Mischvorrichtung und die Druckaufbauvorrichtung sind unmittelbar miteinander verbunden. Vorzugsweise ist ein Gehäuse der Mischvorrichtung, insbesondere ein Gehäuse einer Aufbereitungsschneckenmaschine, mit einem Gehäuse der Druckaufbauvorrichtung, insbesondere mit einem Gehäuse einer Druckaufbauschneckenmaschine, verbunden. Vorzugsweise ist die Mischvorrichtung seitlich an die Druckaufbauvorrichtung angeschlossen. Insbesondere mündet mindestens eine Gehäusebohrung einer Aufbereitungsschneckenmaschine in mindestens eine Gehäusebohrung einer Druckaufbauschneckenmaschine. Vorzugsweise umfasst die Mischvorrichtung eine Aufbereitungsschneckenmaschine mit mindestens einer Behandlungselementwelle und die Druckaufbauvorrichtung eine Druckaufbauschneckenmaschine mit mindestens einer Druckaufbau-Behandlungselementwelle. In einer Zuführzone, in der die mindestens eine Gehäusebohrung der Aufbereitungsschneckenmaschine in die mindestens eine Gehäusebohrung der Druckaufbauschneckenmaschine mündet, hat die mindestens eine Behandlungselementwelle von der nächstgelegenen Druckaufbau-Behandlungselementwelle einen Abstand s, wobei insbesondere gilt: 0,05 mm ≤ s ≤ 10 · D_{A}, insbesondere 0,1 mm ≤ s ≤ 10 · D_{A}, insbesondere 0,1 mm ≤ s ≤ 5 · D_{A}, und insbesondere 0,5 mm ≤ s ≤ D_{A}, wobei D_{A} ein Außendurchmesser der mindestens einen Behandlungselementwelle bezeichnet.

Eine Aufbereitungsanlage nach Anspruch 13 gewährleistet ein einfaches und zuverlässiges Aufbereiten eines Energiespeichermaterials mit einer hohen Qualität. Das Extrusionswerkzeug dient zur Formgebung bzw. Formung des Energiespeichermaterials und/oder zur Beschichtung einer Trägerfolie mit dem Energiespeichermaterial. Die Trägerfolie wird insbesondere direkt beschichtet. Die Trägerfolie ist insbesondere als metallische und/oder polymerbasierte Folie ausgebildet. Dadurch, dass das Extrusionswerkzeug in einer Förderrichtung der Druckaufbauvorrichtung unmittelbar nach der Druckaufbauvorrichtung angeordnet ist, steht ein hoher Druck zur Formgebung des Energiespeichermaterials zur Verfügung. Das Extrusionswerkzeug ist insbesondere schlitzförmig ausgebildet, beispielsweise als schlitzförmige Düse. Das Extrusionswerkzeug hat vorzugsweise eine maximale Austragsbreite b, wobei gilt: 5 mm ≤ b ≤ 2000 mm, insbesondere 50 mm ≤ b ≤ 1500 mm, und insbesondere 100 mm ≤ b ≤ 1000 mm.

Das Extrusionswerkzeug hat vorzugsweise eine Austragsdicke d, wobei insbesondere gilt: 0,01 mm ≤ d ≤ 10 mm, insbesondere 0,05 ≤ d ≤ 5 mm, und insbesondere 0,1 mm ≤ d ≤ 2 mm.

Je höher der mittels der Druckaufbauvorrichtung erzeugte Druck ist, desto dünner und breiter kann das Energiespeichermaterial mittels eines Extrusionswerkzeugs geformt werden. Je höher die Viskosität des fließfähigen Energiespeichermaterials ist, desto mehr Druck ist erforderlich, um das Energiespeichermaterial mittels eines Extrusionswerkzeugs zu formen.

Das Energiespeichermaterial weist nach dem Extrusionswerkzeug vorzugsweise eine Plattenform und/oder eine Folienform auf.

Der Erfindung liegt ferner die Aufgabe zugrunde, ein Verfahren zu schaffen, das ein einfaches und zuverlässiges Aufbereiten eines Energiespeichermaterials mit einer hohen Qualität ermöglicht.

Diese Aufgabe wird durch ein Verfahren mit den Merkmalen des Anspruchs 14 gelöst. Die Vorteile des erfindungsgemäßen Verfahrens entsprechen den bereits beschriebenen Vorteilen der erfindungsgemäßen Aufbereitungsanlage. Das erfindungsgemäße Verfahren kann insbesondere mit mindestens einem Merkmal weitergebildet werden, das im Zusammenhang mit der erfindungsgemäßen Aufbereitungsanlage beschrieben ist. Vorzugsweise dient das Verfahren zum Aufbereiten von Energiespeichermaterialien für Bipolarplatten und/oder zum Aufbereiten von lösemittelhaltigen Energiespeichermaterialien und/oder zum Aufbereiten von lösemittelfreien Energiespeichermaterialien. Derartige Energiespeichermaterialien kommen insbesondere zum Einsatz in Brennstoffzellen und/oder galvanischen Energiespeichern, beispielsweise in Akkumulatoren und/oder Batterien. Das Energiespeichermaterial ist insbesondere elektrisch leitfähig.

Ein Füllstoffanteil des Energiespeichermaterials beträgt insbesondere zwischen 50 Gew.-% und 99,5 Gew.-%, insbesondere zwischen 70 Gew.-% und 99 Gew.-%, und insbesondere zwischen 80 Gew.-% und 98,5 Gew.-%.

Eine Rezeptur für ein Energiespeichermaterial für die Herstellung von Bipolarplatten umfasst insbesondere:
85 Gew.-% bis 98 Gew.-% eines Füllstoffs und
2 Gew.-% bis 15 Gew.-% eines Binders.

Der Füllstoff ist insbesondere ausgewählt aus der Gruppe Graphit, Ruß, Graphen, Kohlenstoffnanoröhren (CNT), mehrwandige Kohlenstoffnanoröhren (MWCNT) und/oder Kohlenstofffasern.

Der Binder ist insbesondere ausgewählt aus der Gruppe Thermoplast (amorph und/oder teilkristallin), beispielsweise PP, PE, PA, PBT, PPS, PEEK, PEAK), thermoplastisches Elastomer, beispielsweise TPA, TPC, TPO, TPS, TPU, TPV, Polymerblends, beispielsweise PP/TPO, PA/TPO. Zusätzlich können der Rezeptur Additive und/oder Stabilisatoren zugegeben werden, beispielsweise Hitzestabilisatoren, UV-Stabilisatoren, Vernetzer, Haftvermittler und/oder Gleitmittel.

Eine Rezeptur für ein lösemittelhaltiges Energiespeichermaterial umfasst beispielsweise:
50 Gew.-% bis 99,5 Gew.-% Füllstoff bzw. Aktivmaterial und
0,5 Gew.-% bis 50 Gew.-% Lösemittel.

Der Füllstoff bzw. das Aktivmaterial ist insbesondere ausgewählt aus der Gruppe Graphit, Graphen, Silizium, Kohlenstoffnanoröhren (CNT), mehrwandige Kohlenstoffnanoröhren (MWCNT), Lithium-Nickel-Mangan-Cobalt-Oxide, Lithium-Cobalt-Oxid, Lithium-Mangan-Oxid-Spinell, Lithium-Eisen-Phosphat, Lithium-Nickel-Cobalt-Aluminium-Oxid, Lithium-Titanat-Oxid, Silizium, Lithium-Aluminium-Legierung, Lithium-Magnesium-Legierung, Lithium-Silizium-Legierung, Lithium-Zinn-Legierung, Lithiumhexafluorophosphat, Lithiumpolysulfid, Lithiummetallpolysulfid, Lithiumlanthanzirkonat und/oder Lithiumtanthantitanoxid.

Das Lösemittel ist insbesondere ausgewählt aus der Gruppe demineralisiertes Wasser, N-Methyl-2-Pyrrolidon (NMP), N-Ethyl-2-Pyrrolidon (NEP) und/oder Triethylphosphat (TEP).

Eine Rezeptur für ein lösemittelfreies Energiespeichermaterial umfasst beispielsweise:
80 Gew.-% bis 99,5 Gew.-% Füllstoff bzw. Aktivmaterial und
0,5 Gew.-% bis 20 Gew.-% mindestens eines Polymers und/oder mindestens eines Binders.

Der Füllstoff bzw. das Aktivmaterial ist insbesondere ausgewählt aus der Gruppe Graphit, Graphen, Silizium, Kohlenstoffnanoröhren (CNT), mehrwandige Kohlenstoffnanoröhren (MWCNT), Lithium-Nickel-Mangan-Cobalt-Oxide, Lithium-Cobalt-Oxid, Lithium-Mangan-Oxid-Spinell, Lithium-Eisen-Phosphat, Lithium-Nickel-Cobalt-Aluminium-Oxid, Lithium-Titanat-Oxid, Silizium, Lithium-Aluminium-Legierung, Lithium-Magnesium-Legierung, Lithium-Silizium-Legierung, Lithium-Zinn-Legierung, Lithiumhexafluorophosphat.Lithiumpolysulfid, Lithiummetallpolysulfid, Lithiumlanthanzirkonat und/oder Lithiumtanthantitanoxid.

Das mindestens eine Polymer ist insbesondere ausgewählt aus der Gruppe PTFE, PVDF und/oder PEO. Hinsichtlich des mindestens einen Binders wird auf die vorangegangenen Ausführungen verwiesen.

Ein lösemittelfreies Energiespeichermaterial kann insbesondere umfassen: polymerbasierte Massen, oxidbasierte Massen und/oder thiophosphatbasierte Massen. Zusätzlich kann ein lösemittelfreies Energiespeichermaterial Additive umfassen.

Vorzugsweise umfasst die Mischvorrichtung eine Aufbereitungsschneckenmaschine und/oder die Druckaufbauvorrichtung eine Druckaufbauschneckenmaschine. Die Aufbereitungsschneckenmaschine wird insbesondere mit einer Drehzahl n_{A} betrieben, wobei gilt: 1 rpm ≤ n_{A} ≤ 2000 rpm, insbesondere 50 rpm ≤ n_{A} ≤ 1600 rpm, und insbesondere 100 rpm ≤ n_{A} ≤ 1200 rpm. Die Druckaufbauschneckenmaschine wird insbesondere mit einer Drehzahl n_{D} betrieben, wobei gilt: 1 rpm ≤ n_{D} ≤ 300 rpm, insbesondere 2 rpm ≤ n_{D} ≤ 200 rpm, und insbesondere 3 rpm ≤ n_{D} ≤ 150 rpm.

Für eine Mehrwellen-Aufbereitungsschneckenmaschine und eine Einwellen-Druckaufbauschneckenmaschine gilt insbesondere: 3 ≤ n_{A}/n_{D} ≤ 500, insbesondere 5 ≤ n_{A}/n_{D} ≤ 150, und insbesondere 10 ≤ n_{A}/n_{D} ≤ 90.

Für eine Mehrwellen-Aufbereitungsschneckenmaschine und eine Mehrwellen-Druckaufbauschneckenmaschine gilt insbesondere: 4 ≤ n_{A}/n_{D} ≤ 200, insbesondere 15 ≤ n_{A}/n_{D} ≤ 120, und insbesondere 30 ≤ n_{A}/n_{D} ≤ 90.

Vorzugsweise ist nach dem Extrusionswerkzeug ein Kalander und/oder eine Prägeeinheit und/oder eine Beschichtungseinheit angeordnet. Hierdurch kann nach dem Extrusionswerkzeug ein Kalandrierprozess und/oder ein Prägeprozess und/oder ein Beschichtungsprozess durchgeführt werden.

Weitere Merkmale, Vorteile und Einzelheiten der Erfindung ergeben sich aus der nachfolgenden Beschreibung mehrerer Ausführungsbeispiele.

Es zeigen:

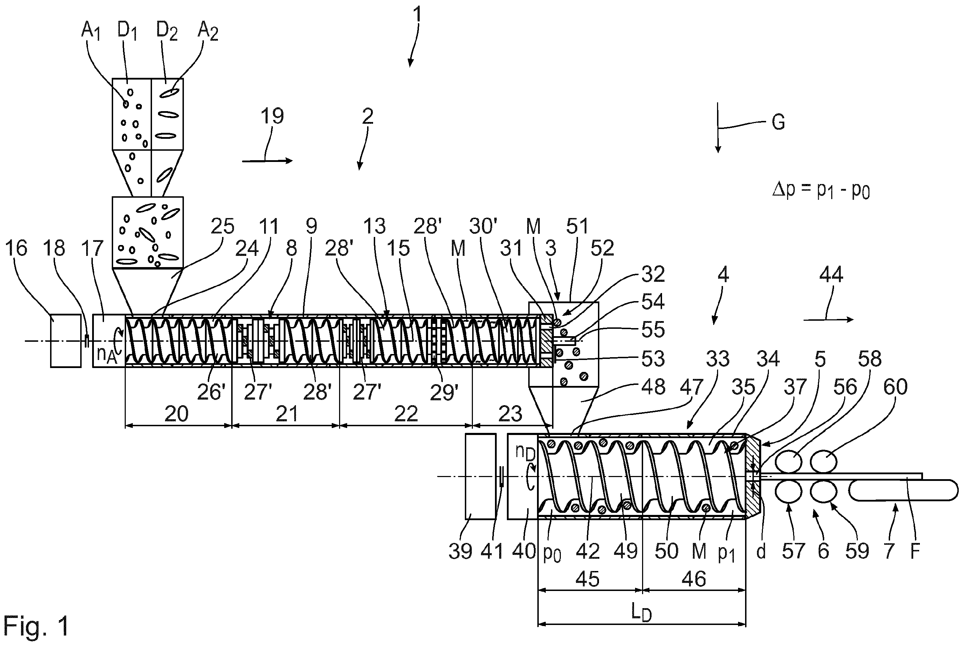

- Fig. 1: eine teilweise geschnittene Seitenansicht einer Aufbereitungsanlage zum Aufbereiten eines Energiespeichermaterials gemäß einem ersten Ausführungsbeispiel mit einer Mischvorrichtung, die eine gleichläufige Zweiwellen-Aufbereitungsschneckenmaschine umfasst, einer Druckaufbauvorrichtung, die eine Einwellen-Druckaufbauschneckenmaschine umfasst, und einer Verbindungsvorrichtung, die einen geschlossenen Schacht umfasst,

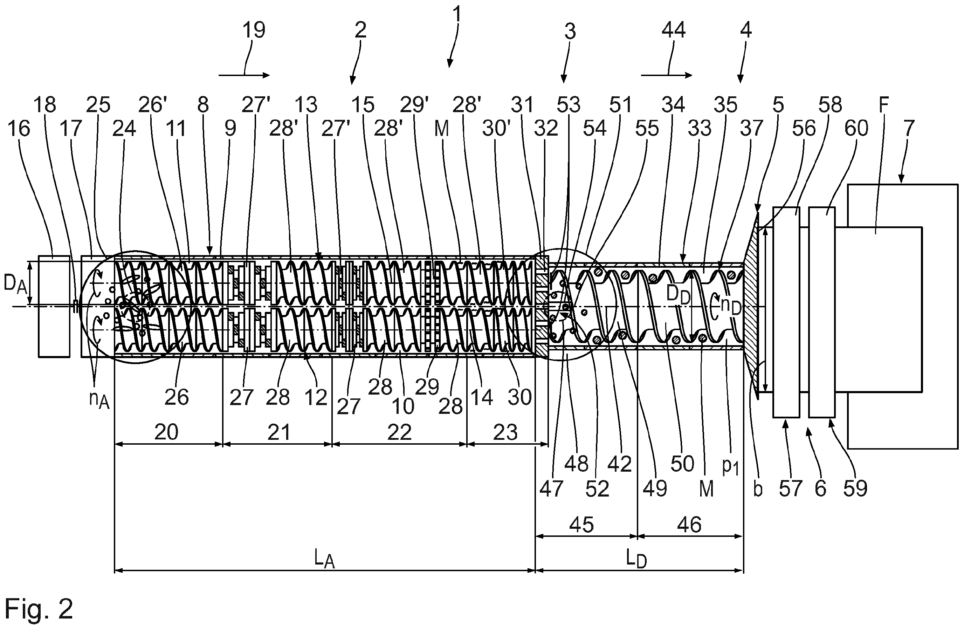

- Fig. 2: eine teilweise geschnittene Draufsicht auf die Aufbereitungsanlage in Fig. 1,

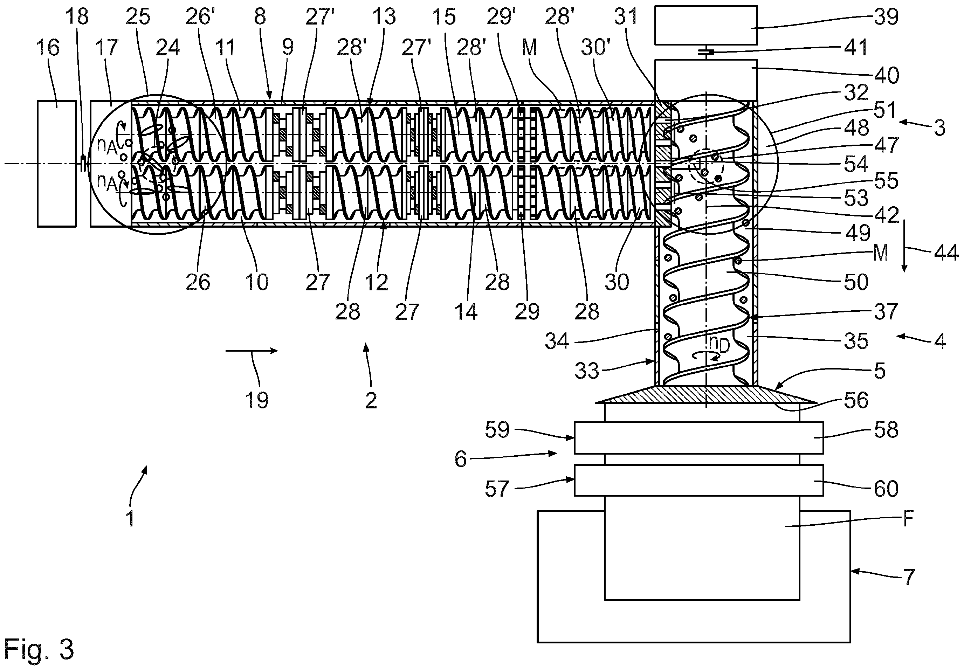

- Fig. 3: eine teilweise geschnittene Draufsicht auf eine Aufbereitungsanlage zum Aufbereiten eines Energiespeichermaterials gemäß einem zweiten Ausführungsbeispiel, wobei eine Einwellen-Druckaufbauschneckenmaschine in einem Winkel von 90° zu einer gleichläufigen Zweiwellen-Aufbereitungsschneckenmaschine angeordnet ist,

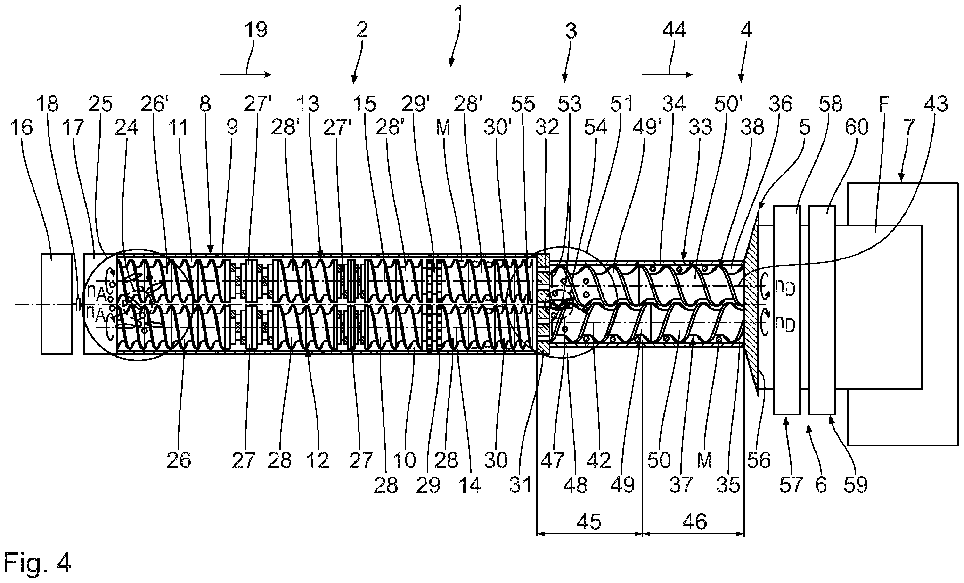

- Fig. 4: eine teilweise geschnittene Draufsicht auf eine Aufbereitungsanlage zum Aufbereiten eines Energiespeichermaterials gemäß einem dritten Ausführungsbeispiel, wobei die Mischvorrichtung eine gleichläufige Zweiwellen-Aufbereitungsschneckenmaschine und die Druckaufbauvorrichtung eine gegenläufige Zweiwellen-Druckaufbauschneckenmaschine umfasst,

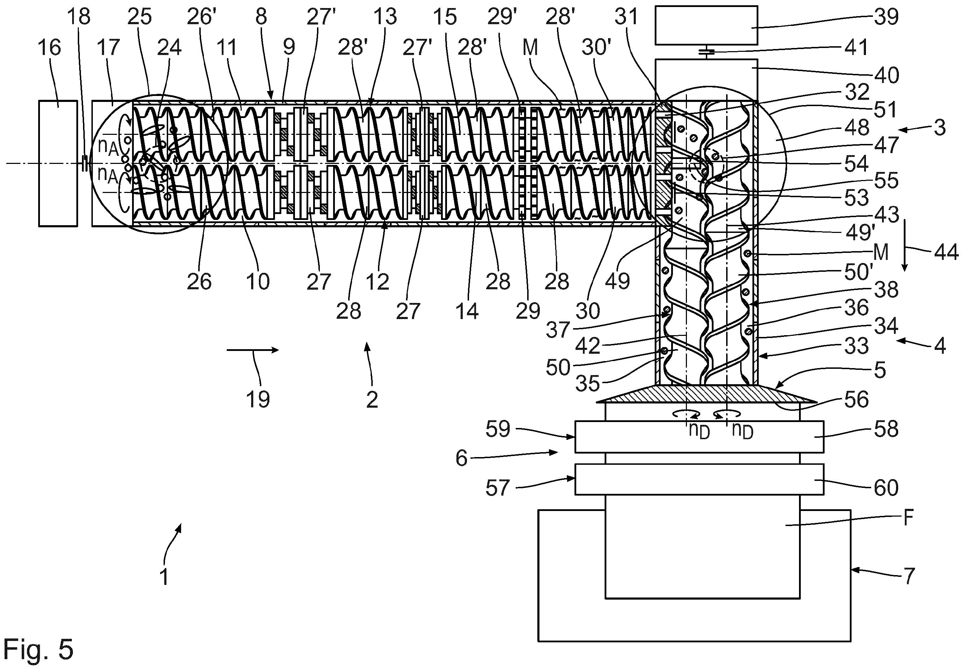

- Fig. 5: eine teilweise geschnittene Draufsicht auf eine Aufbereitungsanlage zum Aufbereiten eines Energiespeichermaterials gemäß einem vierten Ausführungsbeispiel, wobei eine gegenläufige Zweiwellen-Druckaufbauschneckenmaschine in einem Winkel von 90° zu einer gleichläufigen Zweiwellen-Aufbereitungsschneckenmaschine angeordnet ist,

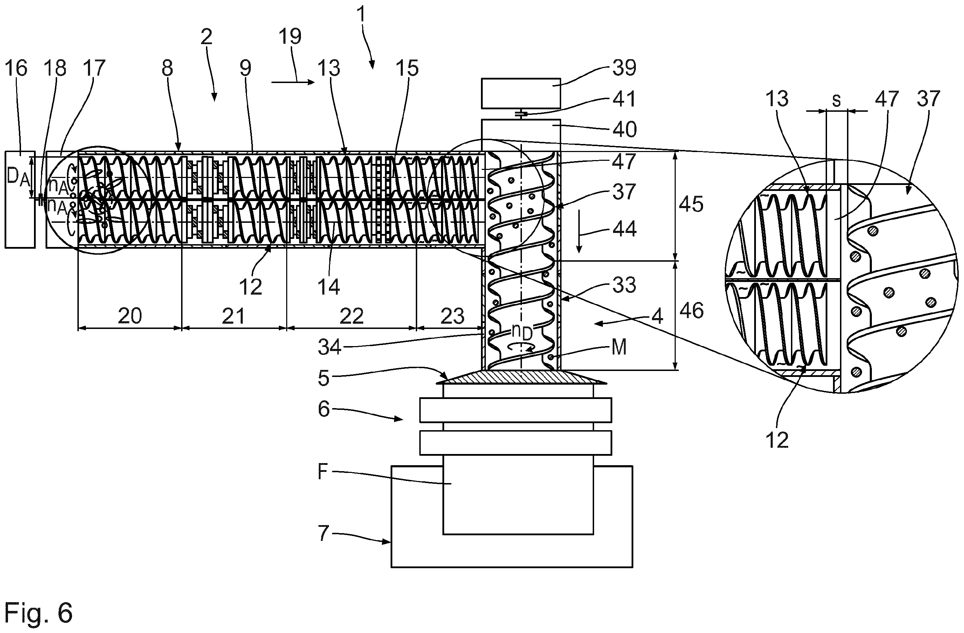

- Fig. 6: eine teilweise geschnittene Draufsicht auf eine Aufbereitungsanlage zum Aufbereiten eines Energiespeichermaterials gemäß einem fünften Ausführungsbeispiel, wobei eine gleichläufige Zweiwellen-Aufbereitungsschneckenmaschine unmittelbar mit einer Einwellen-Druckaufbauschneckenmaschine verbunden ist,

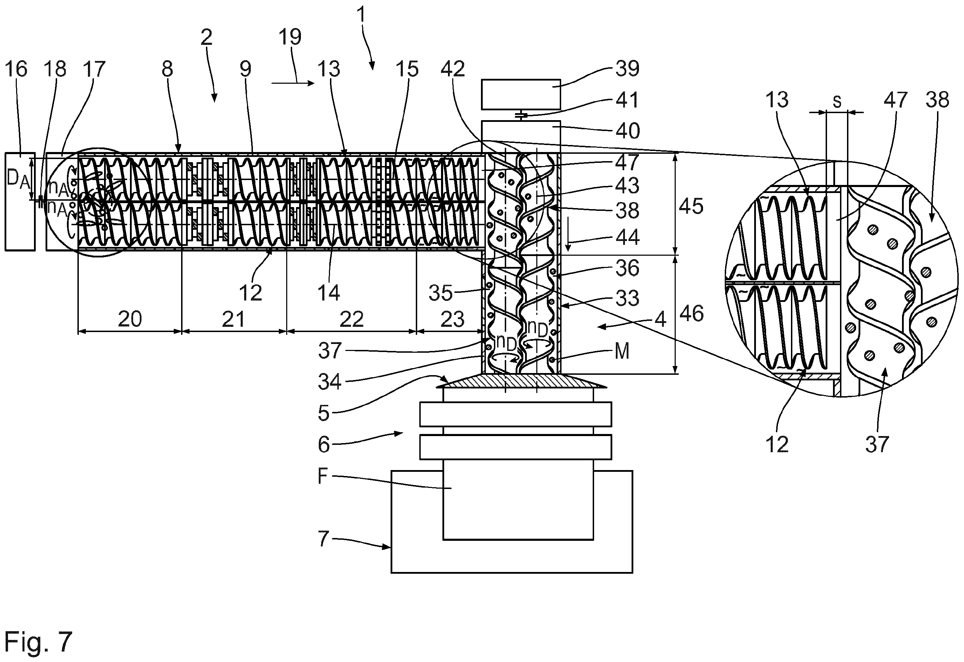

- Fig. 7: eine teilweise geschnittene Draufsicht auf eine Aufbereitungsanlage zum Aufbereiten eines Energiespeichermaterials gemäß einem sechsten Ausführungsbeispiel, wobei eine gleichläufige Zweiwellen-Aufbereitungsschneckenmaschine unmittelbar mit einer gegenläufigen Zweiwellen-Druckaufbauschneckenmaschine verbunden ist,

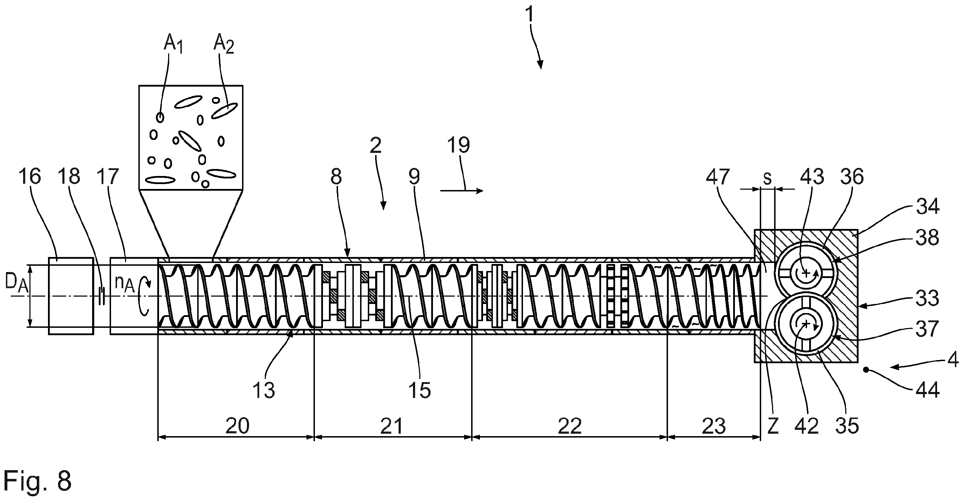

- Fig. 8: eine teilweise geschnittene Seitenansicht einer Aufbereitungsanlage zum Aufbereiten eines Energiespeichermaterials gemäß einem siebten Ausführungsbeispiel, wobei eine gleichläufige Zweiwellen-Aufbereitungsschneckenmaschine unmittelbar mit einer gegenläufigen Zweiwellen-Druckaufbauschneckenmaschine verbunden ist und Druckaufbau-Behandlungselementwellen vertikal übereinander angeordnet sind, und

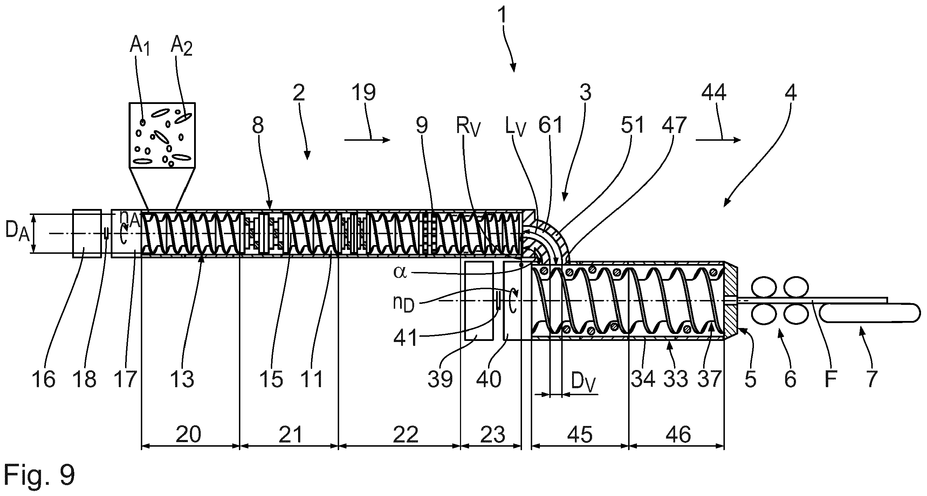

- Fig. 9: eine teilweise geschnittene Seitenansicht einer Aufbereitungsanlage zum Aufbereiten eines Energiespeichermaterials gemäß einem achten Ausführungsbeispiel, wobei eine Verbindungsvorrichtung zwischen einer gleichläufigen Zweiwellen-Aufbereitungsschneckenmaschine und einer Einwellen-Druckaufbauschneckenmaschine eine Rohrleitung umfasst.

Nachfolgend ist anhand der Fig. 1 und 2 ein erstes Ausführungsbeispiel der Erfindung beschrieben. Die in den Fig. 1 und 2 dargestellte Aufbereitungsanlage 1 dient zum kontinuierlichen Aufbereiten eines Energiespeichermaterials M. Das Energiespeichermaterial M ist eine Mischung aus mindestens zwei Ausgangsmaterialien A₁ und A₂. Das Energiespeichermaterial M dient zur Herstellung von Bipolarplatten für Brennstoffzellen und/oder zur Herstellung von galvanischen Energiespeichern, wie beispielsweise Akkumulatoren und Batterien. Das Energiespeichermaterial M ist elektrisch leitfähig. Aus dem Energiespeichermaterial M werden insbesondere Formkörper F hergestellt, die als Halbzeug weiterverarbeitet werden. Die Formkörper F sind beispielsweise als Platten und/oder Folien ausgebildet.

Die Aufbereitungsanlage 1 umfasst eine Mischvorrichtung 2, eine Verbindungsvorrichtung 3, eine Druckaufbauvorrichtung 4, ein Extrusionwerkzeug 5, eine Nachbearbeitungsvorrichtung 6 und eine Transportvorrichtung 7.

Die Mischvorrichtung 2 umfasst eine Aufbereitungsschneckenmaschine 8, die als gleichläufige Mehrwellen-Aufbereitungsschneckenmaschine bzw. gleichläufige Zweiwellen-Aufbereitungsschneckenmaschine ausgebildet ist. Die Aufbereitungsschneckenmaschine 8 umfasst ein Gehäuse 9, in dem zwei zueinander parallele und einander durchdringende Gehäusebohrungen 10, 11 ausgebildet sind. Die Gehäusebohrungen 10, 11 haben im Querschnitt die Form einer liegenden Acht. In den Gehäusebohrungen 10, 11 sind zwei Behandlungselementwellen 12, 13 angeordnet, die um zugehörige Drehachsen 14, 15 in gleichen Drehrichtungen drehantreibbar sind. Zum Drehantreiben umfasst die Mischvorrichtung 2 einen Antriebsmotor 16 und ein Verzweigungsgetriebe 17, zwischen denen eine Kupplung 18 angeordnet ist. Die Behandlungselementwellen 12, 13 werden mittels des Antriebsmotors 16 über das Verzweigungsgetriebe 17 in gleichen Drehrichtungen um die Drehachsen 14, 15 drehangetrieben.

Die Aufbereitungsschneckenmaschine 8 umfasst eine Austragsplatte 31, die das Gehäuse 9 abschließt. Die Austragsplatte 31 weist mehrere Austragsöffnungen 32 auf. Die Austragsplatte 31 ist somit als Lochplatte ausgebildet.

Die Aufbereitungsschneckenmaschine 8 weist eine erste Förderrichtung 19 auf. Die Aufbereitungsschneckenmaschine 8 bildet in der ersten Förderrichtung 19 nacheinander eine Einzugszone 20, eine Aufschmelzzone 21 bzw. eine Aufschmelz- und Mischzone, eine Misch- und Homogenisierungszone 22 und eine Austragszone 23 aus. In der Einzugszone 20 weist das Gehäuse 9 eine Zuführöffnung 24 auf. In die Zuführöffnung 24 mündet ein Zuführtrichter 25. Die Aufbereitungsschneckenmaschine 8 kann weitere Zuführöffnungen entlang des Gehäuses 9 aufweisen. Die Zuführung kann direkt in das Gehäuse 9, insbesondere mittels eines Zuführtrichters, und/oder mittels einer Zuführschneckenmaschine, beispielsweise einer Seitenbeschickungsmaschine, erfolgen. Zum dosierten Zuführen der Ausgangsmaterialien A₁ und A₂ umfasst die Mischvorrichtung zwei Dosiereinheiten D₁ und D₂. In der Einzugszone 20 werden die zugeführten Ausgangsmaterialien A₁ und A₂ in der ersten Förderrichtung 19 zu der Aufschmelzzone 21 bzw. der Aufschmelz- und Mischzone gefördert. Hierzu weisen die Behandlungselementwellen 12, 13 in der Einzugszone 20 Schneckenelemente bzw. Förderelemente 26, 26' auf.

In der Aufschmelzzone 21 bzw. der Aufschmelz- und Mischzone werden die schmelzbaren Ausgangsmaterialien A₁, A₂ aufgeschmolzen bzw. plastifiziert und homogen vermischt. Hierzu weisen die Behandlungselementwellen 12, 13 in der Aufschmelzzone 21 bzw. der Aufschmelz- und Mischzone Knetelemente 27, 27' und Schneckenelemente bzw. Förderelemente 28, 28' auf. Die Knetelemente 27, 27' umfassen insbesondere Knetblöcke mit einteilig miteinander verbundenen Knetscheiben und/oder einzelne Knetscheiben.

In der Misch- und Homogenisierungszone 22 werden die aufgeschmolzenen schmelzbaren Ausgangsmaterialien A₁, A₂, beispielsweise Feststoffe und Lösemittel, vermischt und homogenisiert, so dass eine homogene Mischung entsteht. Die homogene Mischung stellt das Energiespeichermaterial M dar. Das Energiespeichermaterial M ist fließfähig. In der Misch- und Homogenisierungszone 22 weisen die Behandlungselementwellen 12, 13 Knetelemente 27, 27' und Mischelemente 29, 29' und Schneckenelemente bzw. Förderelemente 28, 28' auf. Die Knetelemente 27, 27' und/oder die Mischelemente 29, 29' umfassen insbesondere Knetblöcke mit mehreren einteilig miteinander verbundenen Knetscheiben und/oder einzelne Knetscheiben.

In der Austragszone 23 wird das Energiespeichermaterial M zu der Austragsplatte 31 gefördert. In der Austragszone 23 weisen die Behandlungselementwellen 12, 13 Schneckenelemente bzw. Förderelemente 28, 28' und 30, 30' auf.

Die Behandlungselementwellen 12, 13 weisen in der ersten Förderrichtung 19 eine Länge L_{A} auf. Ferner weisen die Behandlungselementwellen 12, 13 einen Außendurchmesser D_{A} auf. Für ein Verhältnis der Länge L_{A} zu dem Außendurchmesser D_{A} gilt: 20 ≤ L_{A}/D_{A} ≤ 60, insbesondere 25 ≤ L_{A} /D_{A} ≤ 56, und insbesondere 30 ≤ L_{A} /D_{A} ≤ 52.

Die Druckaufbauvorrichtung 4 dient zur Erhöhung eines Drucks p des Energiespeichermaterials M. Die Druckaufbauvorrichtung 4 ist in der ersten Förderrichtung 19 nach der Mischvorrichtung 2 angeordnet.

Die Druckaufbauvorrichtung 4 umfasst eine Druckaufbauschneckenmaschine 33, die als einwellige Druckaufbauschneckenmaschine bzw. Einwellen-Druckaufbauschneckenmaschine ausgebildet ist. Die Druckaufbauschneckenmaschine 33 umfasst ein Gehäuse 34, in dem eine Gehäusebohrung 35 ausgebildet ist. In der Gehäusebohrung 35 ist eine Druckaufbau-Behandlungselementwelle 37 drehantreibbar angeordnet. Die Druckaufbauvorrichtung 4 umfasst einen Antriebsmotor 39 und ein Getriebe 40. Zwischen dem Antriebsmotor 39 und dem Getriebe 40 ist eine Kupplung 41 angeordnet. Die Druckaufbau-Behandlungselementwelle 37 ist mittels des Antriebsmotors 39 über das Getriebe 40 und die Kupplung 41 um eine Drehachse 42 drehantreibbar. Das Gehäuse 34 ist durch das Extrusionswerkzeug 5 abgeschlossen.

Die Druckaufbauschneckenmaschine 33 weist eine zweite Förderrichtung 44 auf. Die zweite Förderrichtung 44 verläuft parallel zu der ersten Förderrichtung 19. Die Aufbereitungsschneckenmaschine 8 und die Druckaufbauschneckenmaschine 33 sind somit mit einem Winkel von 0° zueinander angeordnet bzw. ausgerichtet.

Die Druckaufbauschneckenmaschine 33 bildet in der zweiten Förderrichtung 44 eine Einzugszone 45 und eine Druckaufbauzone 46 aus.

In der Einzugszone 45 ist in dem Gehäuse 34 eine Zuführöffnung 47 ausgebildet. In die Zuführöffnung 47 mündet ein Zuführtrichter 48. In der Einzugszone 45 umfasst die Druckaufbau-Behandlungselementwelle 37 mindestens ein Schneckenelement 49. Das Energiespeichermaterial M hat beim Eintritt in die Einzugszone 45 einen ersten Druck p₀. In der Einzugszone 45 wird das Energiespeichermaterial M zu der Druckaufbauzone 46 gefördert.

In der Druckaufbauzone 46 wird der Druck p₀ des Energiespeichermaterials M erhöht. Am Extrusionswerkzeug 5 weist das Energiespeichermaterial M einen Druck p₁ auf. Für eine Druckerhöhung Δp gilt: Δp = p₁ - p₀. In der Druckaufbauzone 46 weist die Druckaufbau-Behandlungselementwelle 37 mindestens ein Schneckenelement 50 auf. Die Druckaufbauschneckenmaschine 33 weist somit ausschließlich die Einzugszone 45 und die Druckaufbauzone 46 auf. Ferner weist die Druckaufbau-Behandlungselementwelle 37 ausschließlich Schneckenelemente 49, 50 auf, so dass diese als Druckaufbau-Schneckenelementwelle ausgebildet ist.

Die Druckaufbau-Behandlungselementwelle 37 hat in der zweiten Förderrichtung 44 eine Länge L_{D}. Ferner hat die Druckaufbau-Behandlungselementwelle 37 einen Außendurchmesser D_{D}. Für ein Verhältnis der Länge L_{D} zu dem Außendurchmesser D_{D} gilt insbesondere: 3 ≤ L_{D}/D_{D} ≤ 40, insbesondere 4 ≤ L_{D}/D_{D} ≤ 20, und insbesondere 5 ≤ L_{D}/D_{D} ≤ 10.

Für ein Verhältnis des Außendurchmessers D_{A} zu den Außendurchmesser D_{D} gilt insbesondere: 1/5 ≤ D_{A}/D_{D} ≤ 3, insbesondere 1/3 ≤ D_{A}/D_{D} ≤ 2, und insbesondere 1/2 ≤ D_{A}/D_{D} ≤ 1.

Für die Druckerhöhung Δp gilt insbesondere: 1 bar ≤ Δp ≤ 2000 bar, insbesondere 5 bar ≤ Δp ≤ 1000 bar, und insbesondere 10 bar ≤ Δp ≤ 500 bar.

Für den Druck p₀ in Fig. 1 gilt insbesondere: p₀ ≈ pₐₜₘ, wobei pₐₜₘ den atmosphärischen Druck bezeichnet, der ca. 1 bar beträgt.

Für den Druck p₁ in Fig. 1 gilt insbesondere: 1 bar < p₁ ≤ 2000 bar.

Die Austragsöffnungen 32 der Aufbereitungsschneckenmaschine 8 sind in Bezug auf die Richtung G der Schwerkraft oberhalb der Zuführöffnung 47 der Druckaufbauschneckenmaschine 33 angeordnet. Hierdurch fällt das Energiespeichermaterial M nach dem Austritt aus den Austragsöffnungen 32 aufgrund der Schwerkraft in den Zuführtrichter 48.

Die Verbindungsvorrichtung 3 umfasst ein Verbindungselement 51, das als geschlossener Schacht ausgebildet ist. Das Verbindungselement 51 ist mit dem Gehäuse 9 und dem Zuführtrichter 48 verbunden. Die Verbindungvorrichtung 3 kann eine nicht näher dargestellte Temperiereinheit und/oder Entgasungseinheit umfassen, die in und/oder an dem Verbindungselement 51 angeordnet sein kann. In die Verbindungsvorrichtung 3 ist eine Zerkleinerungseinheit 52 integriert. Die Zerkleinerungseinheit 52 umfasst ein Messer 53, das mittels eines Antriebs 54 um eine Drehachse 55 drehantreibbar ist. Die Zerkleinerungseinheit 52 dient zum Zerkleinern der aus den Austragsöffnungen 32 austretenden Stränge des Energiespeichermaterials M.

Das Extrusionswerkzeug 5 ist in der zweiten Förderrichtung 44 nach der Druckaufbauvorrichtung 4 bzw. nach der Druckaufbauschneckenmaschine 33 angeordnet. Das Extrusionswerkzeug 5 weist eine schlitzförmige Austragsöffnung 56 bzw. eine Düsenöffnung auf. Die Austragsöffnung 56 weist eine Austragsbreite b und eine Austragsdicke d auf. Mittels des Extrusionswerkzeugs 5 wird aus dem fließfähigen Energiespeichermaterial M der Formkörper F geformt bzw. hergestellt. Der Formkörper F ist plattenförmig bzw. folienförmig ausgebildet.

Die Nachbearbeitungsvorrichtung 6 ist in der zweiten Förderrichtung 44 nach dem Extrusionswerkzeug 5 angeordnet. Die Nachbearbeitungsvorrichtung 6 dient zum Nachbearbeiten des Formkörpers F. Die Nachbearbeitungsvorrichtung 6 umfasst einen Kalander 57 mit mindestens zwei Kalanderwalzen 58. Der Kalander 57 kann einstufig oder mehrstufig ausgebildet sein. Ferner umfasst die Nachbearbeitungsvorrichtung 6 eine Prägeeinheit 59, die in der zweiten Förderrichtung 44 nach dem Kalander 57 angeordnet ist. Die Prägeeinheit 59 umfasst mindestens zwei Prägewalzen 60. Die Transportvorrichtung 7 ist in der Förderrichtung 44 nach der Nachbearbeitungsvorrichtung 6 angeordnet. Die Transportvorrichtung 7 ist beispielsweise als Förderband ausgebildet.

Die Funktionsweise der Aufbereitungsanlage 1 ist wie folgt:
Die Ausgangsmaterialien A₁ und A₂ werden mittels der Dosiereinheiten D₁ und D₂ dem Zuführtrichter 25 zugeführt. Durch den Zuführtrichter 25 gelangen die Ausgangsmaterialien A₁ und A₂ über die Zuführöffnung 24 in die Einzugszone 20 der Aufbereitungsschneckenmaschine 8. In der Aufbereitungsschneckenmaschine 8 werden die Ausgangsmaterialien A₁ und A₂ zu der Aufschmelzzone 21 bzw. der Aufschmelz- und Mischzone gefördert und dort die schmelzbaren Komponenten aufgeschmolzen bzw. vermischt. In der Misch- und Homogenisierungszone 22 werden die Ausgangsmaterialien A₁ und A₂ zu einer homogenen Mischung aufbereitet. Die homogene Mischung bildet das fließfähige Energiespeichermaterial M. Das Energiespeichermaterial M wird in der Austragszone 23 durch die Austragsöffnungen 32 der Austragsplatte 31 in Strängen ausgetragen. Hierzu ist lediglich ein geringer Druck in der Austragszone 23 erforderlich. Die Zerkleinerungseinheit 52 zerkleinert die Stränge in gewünschter Weise, so dass das Energiespeichermaterial M aufgrund der Schwerkraft in den Zuführtrichter 48 fällt.

Das Energiespeichermaterial M wird durch den Zuführtrichter 48 über die Zuführöffnung 47 in die Einzugszone 45 der Druckaufbauschneckenmaschine 33 zugeführt. Die Druckaufbauschneckenmaschine 33 fördert das Energiespeichermaterial M von der Einzugszone 45 zu der Druckaufbauzone 46. In der Druckaufbauschneckenmaschine 33, insbesondere in der Druckaufbauzone 46, erfolgt die Druckerhöhung Δp. Am Ende der Druckaufbauzone 46 wird das Energiespeichermaterial M mit einem hohen Druck p₁ durch das Extrusionswerkzeug 5 extrudiert. Aufgrund der schlitzförmigen Austragsöffnung 56 entsteht in gewünschter Weise der Formkörper F, der mittels der Nachbearbeitungsvorrichtung 6 in gewünschter Weise nachbearbeitet und anschließend über die Transportvorrichtung 7 abtransportiert wird.

Die Aufbereitungsschneckenmaschine 8 wird mit einer Drehzahl n_{A} betrieben, wobei gilt: 1 rpm ≤ n_{A} ≤ 2000 rpm, insbesondere 50 rpm ≤ n_{A} ≤ 1600 rpm, und insbesondere 100 rpm ≤ n_{A} ≤ 1200 rpm.

Die Druckaufbauschneckenmaschine 33 wird mit einer Drehzahl n_{D} betrieben, wobei gilt: 1 rpm ≤ n_{D} ≤ 500 rpm, insbesondere 2 rpm ≤ n_{D} ≤ 300 rpm, und insbesondere 3 rpm ≤ n_{D} ≤ 150 rpm

Für ein Verhältnis der Drehzahl n_{A} zu der Drehzahl n_{D} gilt insbesondere: 3 ≤ n_{A}/n_{D} ≤ 500, insbesondere 5 ≤ n_{A}/n_{D} ≤ 150, und insbesondere 10 ≤ n_{A}/n_{D} ≤ 90.

Dadurch, dass die Mischvorrichtung 2 und die Druckaufbauvorrichtung 4 separat voneinander ausgebildet sind, sind das Aufbereiten bzw. Mischen des Energiespeichermaterials M und der Druckaufbau in dem Energiespeichermaterial M voneinander entkoppelt. Die Mischvorrichtung 2 kann deshalb hinsichtlich ihrer Mischwirkung optimiert werden, wohingegen die Druckaufbauvorrichtung 4 hinsichtlich ihrer Druckaufbauwirkung optimiert werden kann. Hierdurch wird in einfacher und zuverlässiger Weise ein kontinuierliches und einstufiges Aufbereitungsverfahren bereitgestellt, das ein Energiespeichermaterial M bzw. einen daraus hergestellten Formkörper F in einer hohen Qualität gewährleistet.

Nachfolgend ist anhand von Fig. 3 ein zweites Ausführungsbeispiel der Erfindung beschrieben. Im Unterschied zu dem ersten Ausführungsbeispiel ist die Druckaufbauvorrichtung 4 in einem Winkel von 90° relativ zu der Mischvorrichtung 2 angeordnet. Die zweite Förderrichtung 44 verläuft hierdurch senkrecht zu der ersten Förderrichtung 19. Hierdurch weist die Aufbereitungsanlage 1 eine geringere Baulänge und somit einen kompakteren Aufbau auf. Dadurch, dass das Zuführen des Energiespeichermaterials M in der Verbindungsvorrichtung 3 im Wesentlichen drucklos erfolgt und der Druckaufbau in dem Energiespeichermaterial M mittels der Druckaufbauvorrichtung 4 erfolgt, wirkt sich die L-förmige Anordnung der Druckaufbauvorrichtung 4 zu der Mischvorrichtung 2 nicht nachteilig auf den Druckaufbau aus. Hinsichtlich des weiteren Aufbaus und der weiteren Funktionsweise der Aufbereitungsanlage 1 wird auf das vorangegangene Ausführungsbeispiel verwiesen.

Nachfolgend ist anhand von Fig. 4 ein drittes Ausführungsbeispiel der Erfindung beschrieben. Im Unterschied zu den vorangegangenen Ausführungsbeispielen ist die Druckaufbauschneckenmaschine 33 als gegenläufige Mehrwellen-Druckaufbauschneckenmaschine bzw. mehrwellige Druckaufbauschneckenmaschine ausgebildet. Insbesondere ist die Druckaufbauschneckenmaschine 33 als gegenläufige Zweiwellen-Druckaufbauschneckenmaschine ausgebildet.

In dem Gehäuse 34 der Druckaufbauschneckenmaschine 33 sind zwei Gehäusebohrungen 35, 36 ausgebildet, die einander durchdringen. Die Gehäusebohrungen 35, 36 haben im Querschnitt die Form einer liegenden Acht. Die Gehäusebohrungen 35, 36 sind in horizontaler Richtung nebeneinander angeordnet. In den Gehäusebohrungen 35, 36 sind Druckaufbau-Behandlungselementwellen 37, 38 drehbar angeordnet. Die Druckaufbau-Behandlungselementwellen 37, 38 weisen insbesondere ausschließlich Schneckenelemente 49, 49' und 50, 50' auf, so dass diese als Druckaufbau-Schneckenelementwellen ausgebildet sind. Die Druckaufbau-Behandlungselementwellen 37, 38 werden mittels des Antriebsmotors 39 über das als Verzweigungsgetriebe ausgebildete Getriebe 40 in entgegengesetzten Drehrichtungen um Drehachsen 42, 43 drehangetrieben. Die gegenläufige Druckaufbauschneckenmaschine 33 hat eine Kammerförderung, die in sich abgeschlossen ist, so dass eine Rückströmung bzw. Leckageströmung des Energiespeichermaterials M in den Gehäusebohrungen 35, 36 minimal ist. Hierdurch ist in der Druckaufbauzone 46 ein guter Druckaufbau möglich, ohne dass in unerwünschter Weise mechanische Energie in das Energiespeichermaterial M eingetragen wird.

Die Aufbereitungsschneckenmaschine 8 wird mit einer Drehzahl n_{A} betrieben, wobei gilt: 1 rpm ≤ n_{A} ≤ 2000 rpm, insbesondere 50 rpm ≤ n_{A} ≤ 1600 rpm, und insbesondere 100 rpm ≤ n_{A} ≤ 1200 rpm.

Die Druckaufbauschneckenmaschine 33 wird mit einer Drehzahl n_{D} betrieben, wobei gilt: 1 rpm ≤ n_{D} ≤ 300 rpm, insbesondere 2 rpm ≤ n_{D} ≤ 200 rpm, und insbesondere 3 rpm ≤ n_{D} ≤ 150 rpm

Für ein Verhältnis der Drehzahl n_{A} zu der Drehzahl n_{D} gilt insbesondere: 4 ≤ n_{A}/n_{D} ≤ 200, insbesondere 15 ≤ n_{A}/n_{D} ≤ 120, und insbesondere 30 ≤ n_{A}/n_{D} ≤ 90.

Hinsichtlich des weiteren Aufbaus und der weiteren Funktionsweise wird auf die vorangegangenen Ausführungsbeispiele verwiesen.

Nachfolgend ist anhand von Fig. 5 ein viertes Ausführungsbeispiel der Erfindung beschrieben. Entsprechend dem dritten Ausführungsbeispiel ist die Druckaufbauschneckenmaschine 33 als gegenläufige Zweiwellen-Druckaufbauschneckenmaschine ausgebildet. Im Unterschied zu dem dritten Ausführungsbeispiel und entsprechend dem zweiten Ausführungsbeispiel ist die Druckaufbauvorrichtung 4 in einem Winkel von 90° relativ zu der Mischvorrichtung 2 angeordnet. Hinsichtlich des weiteren Aufbaus und der weiteren Funktionsweise wird auf die vorangegangenen Ausführungsbeispiele verwiesen.

Nachfolgend ist anhand von Fig. 6 ein fünftes Ausführungsbeispiel der Erfindung beschrieben. Im Unterschied zu den vorangegangenen Ausführungsbeispielen ist die Mischvorrichtung 2 unmittelbar an die Druckaufbauvorrichtung 4 angeschlossen, so dass eine Verbindungsvorrichtung nicht erforderlich ist. Eine Austragsplatte ist nicht vorhanden. Die Zuführöffnung 47 der Druckaufbauschneckenmaschine 33 ist seitlich in dem Gehäuse 34 ausgebildet. Das Gehäuse 9 der Aufbereitungsschneckenmaschine 8 ist mit dem Gehäuse 34 der Druckaufbauschneckenmaschine 33 verbunden. Hierzu ist die Druckaufbauvorrichtung 4 bzw. die Druckaufbauschneckenmaschine 33 in einem Winkel von 90° zu der Mischvorrichtung 2 bzw. der Aufbereitungsschneckenmaschine 8 angeordnet.

Die Aufbereitungsschneckenmaschine 8 ist entsprechend der vorangegangenen Ausführungsbeispiele als gleichläufige Zweiwellen-Aufbereitungsschneckenmaschine ausgebildet. Die Druckaufbauschneckenmaschine 33 ist entsprechend dem ersten Ausführungsbeispiel und dem zweiten Ausführungsbeispiel als Einwellen-Druckaufbauschneckenmaschine ausgebildet. Die Behandlungselementwellen 12, 13 weisen zu der Druckaufbau-Behandlungselementwelle 37 einen Abstand s auf. Für s gilt insbesondere: 0,05 mm ≤ s ≤ 10 · D_{A}, insbesondere 0,1 mm ≤ s ≤ 10 · D_{A}, insbesondere 0,1 mm ≤ s ≤ 5 · D_{A}, und insbesondere 0,5 mm ≤ s ≤ D_{A}. Hinsichtlich des weiteren Aufbaus und der weiteren Funktionsweise wird auf die vorangegangenen Ausführungsbeispiele verwiesen.

Nachfolgend ist anhand von Fig. 7 ein sechstes Ausführungsbeispiel der Erfindung beschrieben. Entsprechend dem vorangegangenen Ausführungsbeispiel ist die Mischvorrichtung 2 unmittelbar mit der Druckaufbauvorrichtung 4 verbunden, so dass keine Verbindungsvorrichtung erforderlich ist. Das Gehäuse 9 der Aufbereitungsschneckenmaschine 8 ist seitlich an das Gehäuse 34 der Druckaufbauschneckenmaschine 33 angeschlossen. Hierzu ist die Druckaufbauvorrichtung 4 bzw. die Druckaufbauschneckenmaschine 33 in einem Winkel von 90° relativ zu der Mischvorrichtung 2 bzw. der Aufbereitungsschneckenmaschine 8 angeordnet.

Die Aufbereitungsschneckenmaschine 8 ist entsprechend den vorangegangenen Ausführungsbeispielen als gleichläufige Zweiwellen-Druckaufbauschneckenmaschine ausgebildet. Die Druckaufbauschneckenmaschine 33 ist entsprechend dem dritten Ausführungsbeispiel und dem vierten Ausführungsbeispiel als gegenläufige Zweiwellen-Druckaufbauschneckenmaschine ausgebildet. Die Druckaufbau-Behandlungselementwellen 37, 38 sind in einer horizontalen Richtung nebeneinander angeordnet. Die Behandlungselementwellen 12, 13 haben von der benachbarten Druckaufbau-Behandlungselementwelle 37 einen Abstand s. Für den Abstand s gilt insbesondere: 0,05 mm ≤ s ≤ 10 · D_{A}, insbesondere 0,1 mm ≤ s ≤ 10 · D_{A}, insbesondere 0,1 mm ≤ s ≤ 5 · D_{A}, und insbesondere 0,5 mm ≤ s ≤ D_{A}. Hinsichtlich des weiteren Aufbaus und der weiteren Funktionsweise wird auf die vorangegangenen Ausführungsbeispiele verwiesen.

Nachfolgend ist anhand von Fig. 8 ein siebtes Ausführungsbeispiel der Erfindung beschrieben. Im Unterschied zu dem sechsten Ausführungsbeispiel sind die Druckaufbau-Behandlungselementwellen 37, 38 der gegenläufigen Zweiwellen-Druckaufbauschneckenmaschine 33 in einer vertikalen Richtung übereinander angeordnet. Die Behandlungselementwellen 12, 13 der gleichläufigen Zweiwellen-Aufbereitungsschneckenmaschine 8 haben von den Druckaufbau-Behandlungselementwellen 37, 38 einen Abstand s. Die Zuführöffnung 47 ist in einem Zwickelbereich Z der Druckaufbau-Behandlungselementwellen 37, 38 ausgebildet. Hinsichtlich des weiteren Aufbaus und der weiteren Funktionsweise wird auf die vorangegangenen Ausführungsbeispiele verwiesen.

Nachfolgend ist anhand von Fig. 9 ein achtes Ausführungsbeispiel der Erfindung beschrieben. Im Unterschied zu den vorangegangenen Ausführungsbeispielen ist das Verbindungselement 51 der Verbindungsvorrichtung 3 als Rohrleitung ausgebildet. Das Gehäuse 9 der Aufbereitungsschneckenmaschine 8 ist nicht abgeschlossen, so dass die Gehäusebohrungen 10, 11 in der Austragszone 23 direkt mit einem Kanal 61 verbunden sind, der durch die Rohrleitung ausgebildet wird. Das Gehäuse 9 ist oberhalb des Gehäuses 34 angeordnet, so dass das Verbindungselement 51 an einer Oberseite des Gehäuses 34 angeschlossen ist und in die Zuführöffnung 47 mündet. Das Energiespeichermaterial M wird von der Aufbereitungsschneckenmaschine 8 durch die Rohrleitung zu der Druckaufbauschneckenmaschine 33 geschoben.

Der Kanal 61 weist bezogen auf seine Mittellängsachse eine Länge Lv auf. Für die Länge Lv gilt: 1 ≤ L_{V}/D_{A} ≤ 100, insbesondere 2 ≤ L_{V}/D_{A} ≤ 50, und insbesondere 4 ≤ L_{V}/D_{A} ≤ 10. Ferner weist der Kanal 61 bezogen auf seine Mittellängsachse einen Krümmungsradius Rv auf. Für den Krümmungsradius Rv gilt insbesondere: 0,5 ≤ R_{V} /D_{A} ≤ 10, insbesondere 1 ≤ R_{V} /D_{A} ≤ 7, und insbesondere 2 ≤ R_{V} /D_{A} ≤ 4. Zudem bildet der Kanal 61 zwischen einer Eintrittsöffnung und einer Austrittsöffnung einen Krümmungswinkel α aus. Für den Krümmungswinkel α gilt insbesondere: 1° ≤ α ≤ 90°, insbesondere 5° ≤ α ≤ 70°, und insbesondere 10° ≤ α ≤ 50°. Im Ausführungsbeispiel gemäß Fig. 9 ist der Krümmungswinkel α = 90°. Der Kanal 61 bzw. die Rohrleitung weist einen Innendurchmesser Dv auf, wobei insbesondere gilt: 0,5 ≤ D_{V}/D_{A} ≤ 10, insbesondere 0,8 ≤ D_{V}/D_{A} ≤ 5, und insbesondere 1 ≤ D_{V}/D_{A} ≤ 2.

Hinsichtlich des weiteren Aufbaus und der weiteren Funktionsweise wird auf die vorangegangenen Ausführungsbeispiele verwiesen.

In weiteren Ausführungsbeispielen kann das als Rohrleitung ausgebildete Verbindungselement 51 geradlinig ausgebildet sein und seitlich in die Druckaufbauschneckenmaschine 33 münden. In weiteren Ausführungsbeispielen können mehrere als Rohrleitung ausgebildete Verbindungselemente vorgesehen sein, die das Energiespeichermaterial M in mehrere Teilströme aufteilen, die in die Druckaufbauschneckenmaschine 33 münden. Die Verbindungselemente 51 können an einer Oberseite und/oder seitlich an das Gehäuse 34 der Druckaufbauschneckenmaschine 33 angeschlossen sein. Die Mischvorrichtung 2 und die Druckaufbauvorrichtung 4 können geradlinig zueinander oder in einem Winkel zueinander, insbesondere in einem Winkel von 90° zueinander, angeordnet sein.

Allgemein gilt:
Die Mischvorrichtung 2 kann eine Einwellen-Aufbereitungsschneckenmaschine, eine gleichläufige Mehrwellen-Aufbereitungsschneckenmaschine und/oder eine gegenläufige Mehrwellen-Aufbereitungsschneckenmaschine umfassen. Insbesondere ist eine Mehrwellen-Aufbereitungsschneckenmaschine als Zweiwellen-Aufbereitungsschneckenmaschine ausgebildet.

Die Druckaufbauvorrichtung 4 kann eine Einwellen-Druckaufbauschneckenmaschine, eine gegenläufige Mehrwellen-Druckaufbauschneckenmaschine und/oder eine gleichläufige Mehrwellen-Druckaufbauschneckenmaschine umfassen. Eine Mehrwellen-Druckaufbauschneckenmaschine ist insbesondere als Zweiwellen-Druckaufbauschneckenmaschine ausgebildet.

Die einzelnen Merkmale der beschriebenen Ausführungsbeispiele können in beliebiger Weise miteinander kombiniert werden.

## Patentansprüche

1. Aufbereitungsanlage zum Aufbereiten eines Energiespeichermaterials mit
einer Mischvorrichtung (2) zum Aufbereiten des Energiespeichermaterials (M),
**dadurch gekennzeichnet,**
**dass** zur Erhöhung eines Drucks (p) des Energiespeichermaterials (M) eine Druckaufbauvorrichtung (4) nach der Mischvorrichtung (3) angeordnet ist.

2. Aufbereitungsanlage nach Anspruch 1, **dadurch gekennzeichnet, dass** die Mischvorrichtung (2) eine Aufbereitungsschneckenmaschine (8) umfasst.

3. Aufbereitungsanlage nach Anspruch 2, **dadurch gekennzeichnet, dass** die Aufbereitungsschneckenmaschine (8) mindestens eine Behandlungselementwelle (12, 13) umfasst, die eine Länge L_{A} und einen Außendurchmesser D_{A} hat, wobei gilt: 20 ≤ L_{A}/D_{A} ≤ 60, insbesondere 25 ≤ L_{A} /D_{A} ≤ 56, und insbesondere 30 ≤ L_{A} /D_{A} ≤ 52.

4. Aufbereitungsanlage nach mindestens einem der vorangegangenen Ansprüche, **dadurch gekennzeichnet,**
**dass** die Druckaufbauvorrichtung (4) eine Druckaufbauschneckenmaschine (33) umfasst.

5. Aufbereitungsanlage nach Anspruch 4, **dadurch gekennzeichnet, dass** die Druckaufbauschneckenmaschine (33) mindestens eine Druckaufbau-Behandlungselementwelle (37,38) umfasst, die eine Länge L_{D} und einen Außendurchmesser D_{D} hat, wobei gilt: 3 ≤ L_{D}/D_{D} ≤ 40, insbesondere 4 ≤ L_{D}/D_{D} ≤ 20, und insbesondere 5 ≤ L_{D}/D_{D} ≤ 10.

6. Aufbereitungsanlage nach mindestens einem der vorangegangenen Ansprüche, **dadurch gekennzeichnet,**
**dass** die Druckaufbauvorrichtung (4) eine einwellige Druckaufbauschneckenmaschine (33) umfasst.

7. Aufbereitungsanlage nach mindestens einem der vorangegangenen Ansprüche, **dadurch gekennzeichnet,**
**dass** die Druckaufbauvorrichtung (4) eine mehrwellige Druckaufbauschneckenmaschine (33) umfasst.

8. Aufbereitungsanlage nach mindestens einem der Ansprüche 4 bis 7,
**dadurch gekennzeichnet,**
**dass** die Druckaufbauschneckenmaschine (33) eine Einzugszone (45) und eine Druckaufbauzone (46) umfasst.

9. Aufbereitungsanlage nach mindestens einem der vorangegangenen Ansprüche, **dadurch gekennzeichnet,**
**dass** die Mischvorrichtung (2) eine Aufbereitungsschneckenmaschine (8) mit mindestens einer Behandlungselementwelle (12, 13) und die Druckaufbauvorrichtung (4) eine Druckaufbauschneckenmaschine (33) mit mindestens einer Druckaufbau-Behandlungselementwelle (37, 38) umfassen, wobei für ein Verhältnis eines Außendurchmessers D_{A} der mindestens einen Behandlungselementwelle (12, 13) zu einem Außendurchmesser D_{D} der mindestens einen Druckaufbau-Behandlungselementwelle (37, 38) gilt: 1/5 ≤ D_{A}/D_{D} ≤ 3, insbesondere 1/3 ≤ D_{A}/D_{D} ≤ 2, und insbesondere 1/2 ≤ D_{A}/D_{D} ≤ 1.

10. Aufbereitungsanlage nach mindestens einem der vorangegangenen Ansprüche, **dadurch gekennzeichnet,**
**dass** die Mischvorrichtung (2) mindestens eine Austragsöffnung (32) aufweist, die oberhalb einer Zuführöffnung (47) der Druckaufbauvorrichtung (4) angeordnet ist.

11. Aufbereitungsanlage nach mindestens einem der vorangegangenen Ansprüche, **dadurch gekennzeichnet,**
**dass** zum Zuführen des Energiespeichermaterials (M) zu der Druckaufbauvorrichtung (4) zwischen der Mischvorrichtung (2) und der Druckaufbauvorrichtung (4) eine Verbindungsvorrichtung (3) angeordnet ist.

12. Aufbereitungsanlage nach mindestens einem der Ansprüche 1 bis 9,
**dadurch gekennzeichnet,**
**dass** zum Zuführen des Energiespeichermaterials (M) zu der Druckaufbauvorrichtung (4) die Mischvorrichtung (2) und die Druckaufbauvorrichtung (4) miteinander verbunden sind.

13. Aufbereitungsanlage nach mindestens einem der vorangegangenen Ansprüche, **dadurch gekennzeichnet,**
**dass** nach der Druckaufbauvorrichtung (4) ein Extrusionswerkzeug (5) angeordnet ist.

14. Verfahren zum Aufbereiten eines Energiespeichermaterials mit den Schritten:
- Bereitstellen einer Aufbereitungsanlage (1) nach mindestens einem der Ansprüche 1 bis 13,
- Aufbereiten des Energiespeichermaterials (M) mittels der Mischvorrichtung (2),
- Austragen des Energiespeichermaterials (M) aus der Mischvorrichtung (2) und Zuführen des Energiespeichermaterials (M) zu der Druckaufbauvorrichtung (4),
- Erhöhen eines Drucks (p) des Energiespeichermaterials (M) mittels der Druckaufbauvorrichtung (4), und
- Austragen des Energiespeichermaterials (M) aus der Druckaufbauvorrichtung (4).
